# EUROPÄISCHE PATENTANMELDUNG

(11) **EP 3 470 717 A1**
(43) Veröffentlichungstag der Anmeldung: **17.04.2019**
(21) Anmeldenummer: 17196301.0
(22) Anmeldetag: 13.10.2017
(51) Int. Cl.: F16L 5/04, E04B 1/94, H02G 3/04, F16L 5/14

(54) **BRANDSCHUTZVORRICHTUNG**

(71) Anmelder: HILTI Aktiengesellschaft, 9494 Schaan (LI)
(72) Erfinder: Monden, Thomas, 87778 Stetten (DE); Mordau, Ulf, 86875 Waal (DE); Paetow, Mario, 86899 Landsberg am Lech (DE); Weixler, Roland, 86807 Buchloe (DE)
(74) Vertreter: Hilti Aktiengesellschaft Corporate Intellectual Property

(57) **Zusammenfassung**

Es wird eine Brandschutzvorrichtung (10) zum Abdichten von Wand- oder Deckendurchbrüchen angegeben, aufweisend ein Gehäuse (12), welches eine Gehäusewand (15) und jeweils eine Öffnung (20, 22) an den entgegengesetzten Enden der Gehäusewand (15) aufweist, wobei im Gehäuseinneren ein Formschaumteil (14) angeordnet ist, welches zumindest eine Öffnung (20, 22) des Gehäuses (12) vollständig verschließt.

## Beschreibung

Die vorliegende Erfindung betrifft eine Brandschutzvorrichtung zur Durchführung von Rohren oder Leitungen durch eine Gebäudeöffnung, beispielsweise einen Wand- oder Deckendurchbruch.

Derartige Durchführungen in Wänden oder Decken müssen die geltenden Anforderungen hinsichtlich Brandschutz erfüllen. Das heißt, die Wand- und Deckendurchbrüche müssen in ausreichendem Maß gegen die Weiterleitung von Bränden gesichert sein. Zudem soll eine thermische Sicherung der Räume gewährleistet sein, sodass verhindert wird, dass die Temperatur auf einer dem Feuer abgewandten Seite der betreffenden Decke oder Wand so stark ansteigt, dass es dort zur Selbstentzündung kommen kann. Dabei soll die Installation der Leitungen möglichst einfach durchführbar sein.

Es ist bekannt, zu diesem Zweck kastenförmige Gehäuse in die Öffnungen einzusetzen, die einen Durchlasskanal für die zu installierenden Leitungen und Rohre bilden. Solche Gehäuse können in eine Wand oder Decke eingegossen und nach dem Durchführen der Leitungen mit Dichtmasse gefüllt werden. Dieses Verfahren ist jedoch aufgrund der Aushärtezeiten der Dichtmasse und des handwerklichen Aufwands relativ aufwändig. Des Weiteren sind Leitungsdurchführungen bekannt, die bereits integrierte Abdichtungen aufweisen. Allerdings sind diese unflexibel, was die Anzahl und Geometrie der zu installierenden Leitungen angeht.

Es ist daher eine Aufgabe der vorliegenden Erfindung, eine Brandschutzvorrichtung anzugeben, die einfach zu installieren und hinsichtlich der Anzahl und Geometrie der zu installierenden Leitungen flexibel ist.

Diese Aufgabe wird erfindungsgemäß gelöst durch eine Brandschutzvorrichtung zum Abdichten von Wand- oder Deckendurchbrüchen, aufweisend ein Gehäuse, welches eine Gehäusewand und jeweils eine Öffnung an den entgegengesetzten Enden der Gehäusewand aufweist, wobei im Gehäuseinneren ein Formschaumteil angeordnet ist, welches zumindest eine Öffnung des Gehäuses vollständig verschließt.

Eine derartige Brandschutzvorrichtung hat den Vorteil, dass sie je nach Montagesituation individuell angepasst werden kann. Insbesondere können von einem Anwender selbst Aussparungen in das Formschaumteil eingebracht werden, wobei die Größe, Anzahl und Position der Aussparungen frei festgelegt werden kann. Das Formschaumteil kann zu diesem Zweck aus dem Gehäuse entnehmbar sein.

Da das Formschaumteil zumindest eine Öffnung des Gehäuses vollständig verschließt, ist bereits nach dem Einsetzen der Brandschutzvorrichtung in einen Wand- oder Deckendurchbruch ein umfangreicher Brandschutz gewährleistet. Insbesondere ist die Brandschutzvorrichtung derart ausgebildet, dass sie einem UL-Brandtest für mindestens zwei Stunden standhält.

Durch das Formschaumteil kann die Brandschutzvorrichtung blickdicht, rauchgasdicht und wasserdicht ausgebildet sein, insbesondere kann die Brandschutzvorrichtung als Konvektionssperre dienen. Außerdem wird durch die Brandschutzvorrichtung die Übertragung von Luftschall und Körperschall gedämpft.

Beispielsweise weist das Formschaumteil einen offenzelligen Schaum auf. Insbesondere ist das Formschaumteil komprimierbar. Dadurch können Ungenauigkeiten beim Zuschnitt ausgeglichen werden, indem die Öffnungen in dem Formschaumteil mit Untermaß eingebracht werden. Somit sorgt das Formschaumteil für eine zuverlässige Abdichtung.

Das Formschaumteil weist vorzugsweise eine Höhe von mindestens 10 mm auf. Insbesondere kann die Höhe des Formschaumteils einer Gehäusehöhe entsprechen.

Gemäß einer Ausführungsform weist das Formschaumteil mindestens eine vorgefertigte Öffnung auf. Dadurch kann eine Leitungsinstallation besonders schnell durchgeführt werden, da von einem Anwender keine oder weniger Öffnungen in das Formschaumteil geschnitten werden müssen. Alternativ muss das Formschaumteil nicht unbedingt eine vorgefertigte Öffnung aufweisen.

Die mindestens eine Öffnung des Formschaumteils ist vorzugsweise durch einen Stopfen verschlossen. Dadurch gewährleistet die Brandschutzvorrichtung vollen Schutz, auch wenn nicht alle Öffnungen des Formschaumteils mit Leitungen belegt sind. Beispielsweise weist das Formschaumteil mehrere Öffnungen in unterschiedlichen Größen auf, welche durch Stopfen verschlossen sind. Ein Benutzer kann je nach Anwendungsfall die Öffnungen in der passenden Größe verwenden, während die übrigen Öffnungen durch die Stopfen verschlossen bleiben.

Vorzugsweise sind die Stopfen aus dem gleichen Material gefertigt wie das Formschaumteil.

Um eine besonders hohe Flexibilität hinsichtlich der Leitungsgeometrie(n) zu bieten, können die Stopfen lamellenförmig ausgebildet sein. Die einzelnen Lamellen können entsprechend dem Durchmesser der zu installierenden Leitung entnommen werden.

Alternativ oder zusätzlich kann das Formschaumteil eine Schablone oder ein Raster aufweisen. Diese können einem Anwender als Hilfestellung beim Zuschneiden des Formschaumteils dienen.

Gemäß einer bevorzugten Ausführungsform weist das Formschaumteil ein Brandschutzmaterial auf. Insbesondere weist das Formschaumteil ein hitze- und/oder feuerhemmendes und/oder wasserdichtes Material auf oder besteht aus einem solchen Material. Im Brandfall kann sich auf dem Formschaumteil eine Aschekruste bilden, welche zusätzlich das Eindringen von Wasser verhindern kann.

Das Gehäuse kann einteilig oder mehrteilig ausgeführt sein. Es kann aus Kunststoff oder Metall bestehen.

Um die Montage in einem Wand- oder Deckendurchbruch zu erleichtern, kann das Gehäuse einen umlaufenden Flansch oder Befestigungslaschen aufweisen. Diese können dazu dienen, das Gehäuse vor dem Eingießen in einer festen Position zu fixieren. Zudem ist die Brandschutzvorrichtung dadurch besonders einfach montierbar.

Um eine größtmögliche Flexibilität zu bieten, kann das Gehäuse höhenverstellbar sein. Zu diesem Zweck kann das Gehäuse zwei Gehäuseteile aufweisen, die ineinander gesteckt sind und auseinanderziehbar sind. Dadurch kann das Gehäuse an verschieden dicke Wände und Decken angepasst werden.

Beispielsweise weist das Gehäuse eine Rasterung auf, wobei das Gehäuse entsprechend der Rasterung stufenweise höhenverstellbar ist. Die Rasterung kann ineinandergreifende Prägungen und Vorsprünge aufweisen, wobei ein erstes Gehäuseteil die Prägungen und ein zweites Gehäuseteil die Vorsprünge aufweisen kann.

In einer alternativen Ausführungsform kann das Gehäuse stufenlos höhenverstellbar sein. Um eine stufenlose Verstellbarkeit zu erreichen, kann das Gehäuse einen Klemmmechanismus aufweisen. Der Klemmmechanismus kann derart ausgebildet sein, dass die beiden Gehäuseteile in einer festen Position zueinander gehalten sind, aber unter Kraftaufwand auseinandergezogen oder zusammengeschoben werden können.

Gemäß einer weiteren Ausführungsform kann das Gehäuse modular erweiterbar sein.

Die Brandschutzvorrichtung kann einen Deckel aufweisen, um das Gehäuse beim Eingießen in einen Durchbruch abzudichten, sodass kein Beton in das Gehäuse gelangen kann. Der Deckel kann nach dem Eingießen entfernt werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine erfindungsgemäße Brandschutzvorrichtung in einer Draufsicht,
- Figur 2 einen Längsschnitt durch die Brandschutzvorrichtung aus Figur 1,
- Figur 3 einen Längsschnitt durch eine weitere Brandschutzvorrichtung,
- Figur 4 die Brandschutzvorrichtung aus Figur 3 in einer Draufsicht und
- Figur 5 eine Brandschutzvorrichtung in einer Seitenansicht.

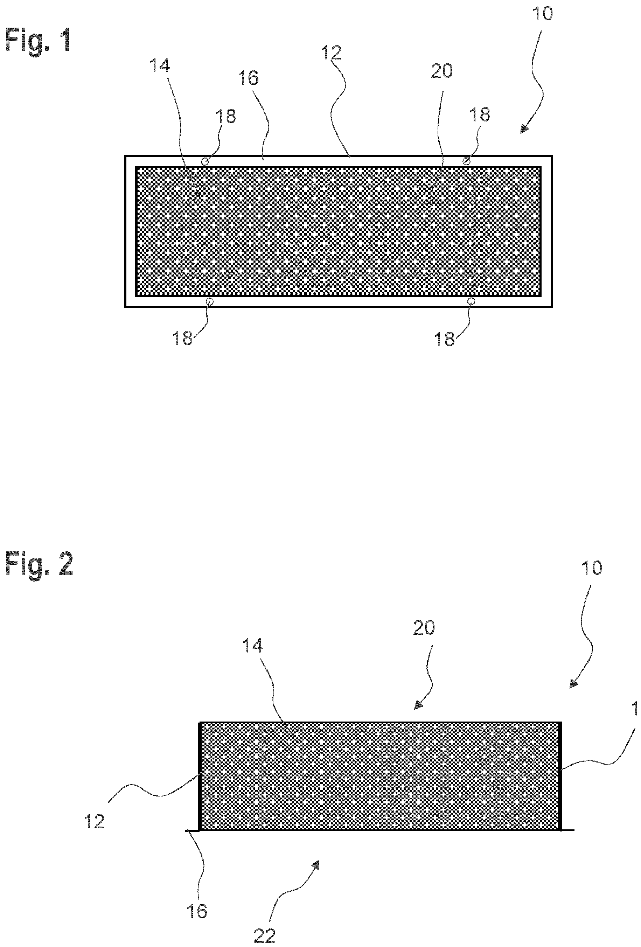

Figur 1 zeigt eine Brandschutzvorrichtung 10 in einer Draufsicht. Die Brandschutzvorrichtung 10 weist ein Gehäuse 12 und ein Formschaumteil 14 auf. Das Formschaumteil 14 kann ein Brandschutzmaterial aufweisen oder aus einem solchen bestehen. Beispielsweise besteht das Formschaumteil 14 aus einem Polyurethanschaum. Die Brandschutzvorrichtung 10 kann somit als Schalungselement mit integriertem Brandschutz dienen.

An einem umlaufenden Rand des Gehäuses 12 ist ein Flansch 16 angeordnet. Dieser dient dazu, die Brandschutzvorrichtung 10 in einem Durchbruch zu platzieren. Zu diesem Zweck kann der Flansch 16 zusätzlich Löcher 18 aufweisen, um die Brandschutzvorrichtung 10 mit Bolzen, Schrauben oder anderen Verbindungsmitteln an einer Schalung, einer Wand oder einer Decke zu befestigen.

Figur 2 zeigt einen Längsschnitt durch die Brandschutzvorrichtung 10 aus Figur 1. Aus den Figuren 1 und 2 ist ersichtlich, dass eine obere Öffnung 20 und eine untere Öffnung 22 an den entgegengesetzten Enden einer Gehäusewand 15 durch das Formschaumteil 14 verschlossen sind. Insbesondere ist das Gehäuse 12 durch das Formschaumteil 14 komplett gefüllt.

Die Begriffe "oben" und "unten" beziehen sich dabei auf einen Zustand, in dem die Brandschutzvorrichtung 10 in einer Decke montiert ist.

Die Größe der Öffnungen 20, 22 kann zwischen 100 mm x 100 mm und 400 mm x 1000 mm liegen.

Das Formschaumteil 14 kann von einem Benutzer mit einem geeigneten Werkzeug, beispielsweise einem Bohrer oder einer Lochsäge, entsprechend der jeweiligen Leitungskonfiguration zugeschnitten werden. Zu diesem Zweck kann das Formschaumteil 14 aus dem Gehäuse 12 entnommen werden.

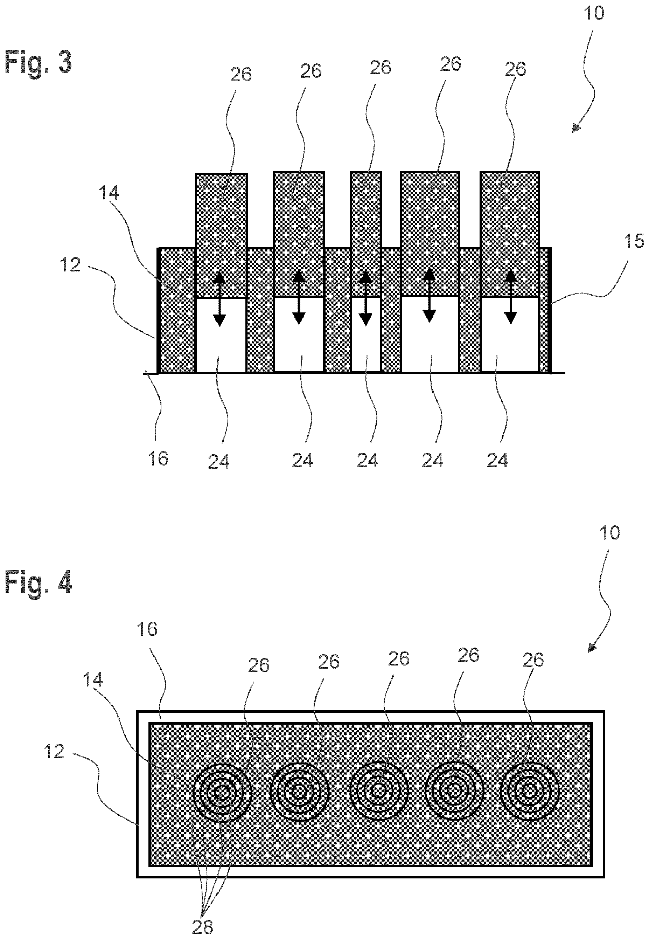

Figur 3 zeigt eine weitere mögliche Ausführungsform der Brandschutzvorrichtung 10. Dabei weist das Formschaumteil 14 mehrere vorgefertigte Öffnungen 24 in Form von Ausnehmungen auf, die durch entnehmbare Stopfen 26 verschlossen sind. Die Stopfen 26 können von einem Benutzer entsprechend einer vorgesehenen Leitungskonfiguration entnommen werden. Gegenüber der in Figur 1 gezeigten Variante muss das Formschaumteil 14 daher nicht mehr vom Benutzer aufwendig zugeschnitten werden. Natürlich ist es dennoch möglich, zusätzliche Öffnungen 24 in das Formschaumteil 14 zu schneiden.

Um die Flexibilität der Brandschutzvorrichtung 10 weiter zu optimieren, können die Stopfen 26 lamellenförmig ausgebildet sein, wie in Figur 4 dargestellt. Jeder der Stopfen 26 weist vier Lamellen 28 auf. Die Anzahl der Lamellen 28 kann jedoch beliebig gewählt werden. Je nach Leitungskonfiguration und Leitungsdurchmesser können die Stopfen 26 komplett oder nur einzelne Lamellen 28 entnommen werden.

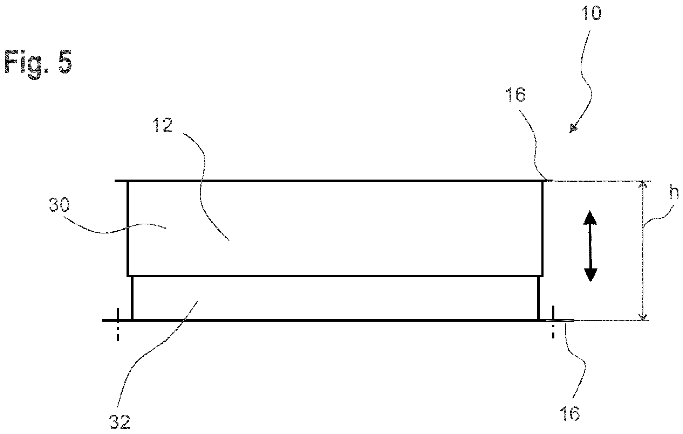

Figur 5 zeigt eine Brandschutzvorrichtung 10 in einer Seitenansicht. Das Gehäuse 12 besteht aus zwei Gehäuseteilen 30, 32, die ineinandergeschoben sind. Dadurch ist die Höhe h des Gehäuses 12 verstellbar. Um die Höhe h zu verstellen, können die Gehäuseteile 30, 32 einfach auseinandergezogen oder zusammengeschoben werden.

Zur Fixierung der Gehäuseteile 30, 32 kann die Brandschutzvorrichtung 10 einen Klemmmechanismus aufweisen. Der Klemmmechanismus kann derart ausgebildet sein, dass das Gehäuse 12 stufenlos höhenverstellbar ist.

Alternativ können die Gehäuseteile 30, 32 eine Rasterung aufweisen, wobei das Gehäuse 12 entsprechend der Rasterung stufenweise höhenverstellbar ist.

Gemäß einer weiteren Ausführungsform können die Gehäuseteile 30, 32 durch einen Schraubmechanismus miteinander verbunden sein, der gelöst werden muss, wenn die Gehäuseteile 30, 32 zueinander verschoben werden sollen.

Die Gehäuseteile 30, 32 können auch komplett voneinander getrennt werden. Dadurch kann beispielsweise ein Gehäuseteil 30, 32, welches das Formschaumteil 14 enthält, zur einfacheren Bearbeitung des Formschaumteils 14 vorübergehend aus einem Durchbruch entnommen werden.

In einer alternativen Ausführungsform kann das Gehäuse 12 einteilig ausgebildet sein.

## Patentansprüche

1. Brandschutzvorrichtung (10) zum Abdichten von Wand- oder Deckendurchbrüchen, aufweisend ein Gehäuse (12), welches eine Gehäusewand (15) und jeweils eine Öffnung (20, 22) an den entgegengesetzten Enden der Gehäusewand (15) aufweist, wobei im Gehäuseinneren ein Formschaumteil (14) angeordnet ist, welches zumindest eine Öffnung (20, 22) des Gehäuses (12) vollständig verschließt.

2. Brandschutzvorrichtung (10) nach Anspruch 1, **dadurch gekennzeichnet, dass** das Formschaumteil (14) mindestens eine vorgefertigte Öffnung (24) aufweist.

3. Brandschutzvorrichtung (10) nach Anspruch 2, **dadurch gekennzeichnet, dass** die mindestens eine Öffnung (24) des Formschaumteils (14) durch einen Stopfen (26) verschlossen ist.

4. Brandschutzvorrichtung (10) nach Anspruch 3, **dadurch gekennzeichnet, dass** der Stopfen (26) lamellenförmig ausgebildet ist.

5. Brandschutzvorrichtung (10) nach einem der vorhergehenden Ansprüche, **dadurch gekennzeichnet, dass** das Formschaumteil (14) eine Schablone oder ein Raster aufweist.

6. Brandschutzvorrichtung (10) nach einem der vorhergehenden Ansprüche, **dadurch gekennzeichnet, dass** das Formschaumteil (14) ein Brandschutzmaterial aufweist.

7. Brandschutzvorrichtung (10) nach einem der vorhergehenden Ansprüche, **dadurch gekennzeichnet, dass** eine Höhe (h) des Gehäuses (12) verstellbar ist.

8. Brandschutzvorrichtung (10) nach Anspruch 7, **dadurch gekennzeichnet, dass** das Gehäuse (12) eine Rasterung aufweist, wobei das Gehäuse (12) entsprechend der Rasterung stufenweise höhenverstellbar ist.

9. Brandschutzvorrichtung (10) nach Anspruch 7, **dadurch gekennzeichnet, dass** das Gehäuse (12) stufenlos höhenverstellbar ist.
